# EUROPÄISCHE PATENTANMELDUNG

(11) **EP 3 943 218 A1**
(43) Veröffentlichungstag der Anmeldung: **26.01.2022**
(21) Anmeldenummer: 21185564.8
(22) Anmeldetag: 14.07.2021
(51) Int. Cl.: B22F 10/00, B22F 10/20, B22F 10/36, B22F 10/366, B22F 10/38, B22F 10/40, B22F 10/47, B22F 10/66, B29C 64/153, B29C 64/40, B33Y 10/00, B33Y 40/20

(54) **VERFAHREN ZUM HERSTELLEN EINES BAUTEILS MITTELS ADDITIVER FERTIGUNG UND SPANENDER NACHBEARBEITUNG**

(30) Priorität: 21.07.2020 DE 102020119258
(71) Anmelder: Universität Stuttgart, 70174 Stuttgart (DE)
(72) Erfinder: MAUCHER, Clemens, 89075 Ulm (DE); TEICH, Heiko, 71636 Ludwigsburg (DE)
(74) Vertreter: Qip Patentanwälte Dr. Kuehn & Partner mbB

(57) **Zusammenfassung**

Es werden ein teilfertiges Bauteil (1) und ein Verfahren zum Herstellen eines Bauteils (33) beschrieben. Das teilfertige Bauteil (1) wird mit einem ersten Bauteilbereich (3) und einem zweiten Bauteilbereich (5) jeweils durch additive Fertigung aufgebaut. Dabei grenzen der erste und der zweite Bauteilbereich (3, 5) an einer Grenzfläche (7) aneinander angrenzen und der erste Bauteilbereich (3) wird mit einer ersten mechanischen Festigkeit aufgebaut und der zweite Bauteilbereich (5) wird mit einer zweiten mechanischen Festigkeit, welche geringer ist als die erste mechanischen Festigkeit, aufgebaut. Insbesondere werden die Bauteilbereiche (3, 5) vorzugsweise derart aufgebaut, dass der erste Bauteilbereich (3) eine erste Porosität aufweist und der zweite Bauteilbereich (5) eine zweite Porosität aufweist, welche derart höher ist als die erste Porosität, dass eine Dichte von den zweiten Bauteilbereich (5) bildendem Material um zwischen 1% und 20%, vorzugsweise zwischen 2% und 8%, geringer ist als eine Dichte von den ersten Bauteilbereich (3) bildendem Material. Anschließend wird der zweite Bauteilbereich (5) zusammen mit einem an die Grenzfläche (7) angrenzenden Teil des ersten Bauteilbereichs (3) durch spanendes Abtragen entfernt. Es ergeben sich unter anderem eine schonendere Nachbearbeitung des teilfertigen Bauteils (1) bei gleichzeitig höhere Bearbeitungspräzision und verbesserten Fertigungsbedingungen.

## Beschreibung

### GEBIET DER ERFINDUNG

Die vorliegende Erfindung betrifft ein Verfahren zum Herstellen eines Bauteils mittels additiver Fertigung und anschließender Nachbearbeitung. Die Erfindung betrifft ferner ein hierbei erzeugbares teilfertiges Bauteil.

### HINTERGRUND DER ERFINDUNG

Bauteile können für verschiedenste Einsatzzwecke verwendet werden. Dabei können physikalische Eigenschaften wie beispielsweise eine Geometrie einschließlich insbesondere einer Form von Oberflächen des Bauteils, eingesetzte Materialien, etc. an einen konkreten Einsatzzweck angepasst werden.

Herkömmlich werden Bauteile oft durch subtraktive Fertigung hergestellt. Dabei wird Material beispielsweise durch Drehen, Fräsen, Bohren, Schleifen, etc. von einem Rohling des Bauteils sukzessive entfernt, bis das resultierende Bauteil eine gewünschte Form aufweist. Allerdings kann eine subtraktive Fertigung aufwendig sein, einen hohen Ausschuss an eingesetzten Materialien mit sich bringen und komplexe Formen können oft nicht oder nur mit sehr hohem Aufwand erzeugt werden.

Es wurden additive Fertigungsmethoden entwickelt, bei denen ein Bauteil aus einem anfänglich in Pulverform vorliegenden Material sukzessive aufgebaut wird. Beispiele solcher additiver Fertigungsmethoden sind das Laserpulverbettfusionsverfahren (LPBF - laser powder bed fusion), das selektive Laserschmelzen (SLM - selective laser melting), das selektive Lasersintern (SLS - selective laser sintering) und ähnliche Verfahren. Additive Fertigungsmethoden versprechen, eine Herstellung hochkomplex geformter Bauteile bei verhältnismäßig geringem Aufwand und/oder Kosten zu ermöglichen.

Allerdings wurde beobachtet, dass bei der Herstellung von Bauteilen mithilfe additiver Fertigungsmethoden oft nach einer Herstellung eines teilfertigen Bauteils, d.h. eines Zwischenprodukts oder Halbzeugs, welches durch additive Fertigung erzeugt wurde, dieses teilfertige Bauteil anschließend noch nachbearbeitet werden muss.

Beispielsweise wurde erkannt, dass das teilfertige Bauteil in vielen Fällen hinsichtlich seiner Oberflächen Eigenschaften aufweist, welche Anforderungen an diese Oberflächen, die aus dem Einsatzzweck resultieren, nicht genügen. Zum Beispiel weisen Oberflächen eines additiv gefertigten, nicht nachbearbeiteten Bauteils oft Unebenheiten auf und/oder können bei der additiven Fertigung nicht mit einer ausreichenden geometrischen Genauigkeit erzeugt werden.

Ferner können beispielsweise bestimmte Hohlraumstrukturen wie z.B. Durchgangsöffnungen, welche in dem fertigen Bauteil vorhanden sein sollen, bei additiver Fertigung oft nur hergestellt werden, wenn die entsprechenden Hohlräume zwischenzeitlich durch sogenannte Stützstrukturen gefüllt bzw. abgestützt werden. Andere Stützstrukturen können dazu eingesetzt werden, fragile Bereiche eines Bauteils während dessen Fertigung gegen ein Einwirken übermäßiger Kräfte zu schützen. Stützstrukturen müssen im Allgemeinen nachträglich von dem teilfertigen Bauteil durch geeignete Nachbearbeitung entfernt werden.

Eine geeignete Nachbearbeitung des teilfertigen Bauteils kann somit in vielen Fällen dazu dienen, eine Qualität der genannten Oberflächen zu verbessern und/oder zwischenzeitlich notwendige Stützstrukturen letztendlich zu entfernen.

Oft werden teilfertige Bauteile durch spanendes Abtragen nachbearbeitet. Dabei wird beispielsweise durch Abdrehen, Abfräsen oder Bohren Material subtraktiv von dem teilfertigen Bauteil abgetragen, um eine Oberfläche zu erzeugen oder hinsichtlich ihrer physikalischen Eigenschaften zu verändern. Zum spanenden Abtragen werden meist Zerspanungswerkzeuge wie beispielsweise ein Drehmeißel, ein Bohrer oder ein Fräswerkzeug eingesetzt, welche eine geometrisch bestimmte Schneide aufweisen, mithilfe derer makroskopische Späne aus dem teilfertigen Bauteil abgetragen werden.

Allerdings wurde erkannt, dass zum spanenden Abtragen von Material teilweise erhebliche Kräfte auf das teilfertige Bauteil auszuüben sind. Beispielsweise können von einem zum spanenden Abtragen eingesetzten Werkzeug während des Abtragens hohe Kräfte bzw. Drücke auf einen zu bearbeitenden Bereich des teilfertigen Bauteils ausgeübt werden. Auch von einer Haltevorrichtung, die das teilfertige Bauteil während des Nachbearbeitens halten soll, können erhebliche Kräfte auf das teilfertige Bauteil ausgeübt werden.

Insbesondere da es sich bei additiv zu fertigenden Bauteilen oft um Bauteile mit einer komplexen und/oder filigranen Struktur handelt, kann ein Ausüben solcher hoher Kräfte sich negativ auf eine Qualität des letztendlich erzeugten Bauteils auswirken. Beispielsweise kann das teilfertige Bauteil durch diese Kräfte irreversible beschädigt werden oder zumindest während der Bearbeitung temporär verformt werden, sodass an dem fertigen Bauteil unzulässig hohe Fertigungstoleranzen entstehen können.

### ZUSAMMENFASSUNG DER ERFINDUNG UND VORTEILHAFTER AUSFÜHRUNGSFORMEN

Es wurde somit erkannt, dass ein Bedarf an einem verbesserten Verfahren zum Herstellen eines Bauteils sowie an einem hierdurch herstellbaren teilfertigen Bauteil bestehen kann. Insbesondere soll das Bauteil mit hoher Präzision, hoher Zuverlässigkeit und/oder mit verhältnismäßig geringem Aufwand bzw. Kosten hergestellt werden können.

Einem solchen Bedarf kann mit dem Gegenstand eines der unabhängigen Ansprüche entsprochen werden. Vorteilhafte Ausführungsformen sind in den abhängigen Ansprüchen sowie in der nachfolgenden Beschreibung dargelegt.

Gemäß einem ersten Aspekt der Erfindung wird ein Verfahren zum Herstellen eines Bauteils vorgestellt. Das Verfahren weist zumindest folgende Schritte auf:
(i) Aufbauen eines ersten Bauteilbereichs und eines zweiten Bauteilbereichs jeweils durch additive Fertigung, wobei der erste und der zweite Bauteilbereich an einer Grenzfläche aneinander angrenzen und wobei der erste Bauteilbereich mit einer ersten mechanischen Festigkeit aufgebaut wird und der zweite Bauteilbereich mit einer zweiten mechanischen Festigkeit, welche geringer ist als die erste mechanischen Festigkeit, aufgebaut wird; und
(ii) Entfernen des zweiten Bauteilbereichs zusammen mit einem an die Grenzfläche angrenzenden Teil des ersten Bauteilbereichs durch spanendes Abtragen.

Gemäß einem zweiten Aspekt der Erfindung wird ein teilfertiges Bauteil vorgestellt, welches einen ersten Bauteilbereich und einen zweiten Bauteilbereich, welche jeweils durch additive Fertigung aufgebaut wurden, aufweist. Der erste und der zweite Bauteilbereich grenzen an einer Grenzfläche aneinander. Der erste Bauteilbereich weist eine erste Porosität auf und der zweite Bauteilbereich weist eine zweite Porosität auf, welche derart höher ist als die erste Porosität, dass eine Dichte von den zweiten Bauteilbereich bildendem Material um zwischen 1% und 20%, vorzugsweise zwischen 2% und 8%, geringer ist als eine Dichte von den ersten Bauteilbereich bildendem Material.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Durch additive Fertigung können Bauteile kosten- und materialeffizient hergestellt werden. Dabei können komplexe Bauteilstrukturen gefertigt werden. Die Bauteile können aus verschiedensten pulverförmigen Materialien, insbesondere aus einem Metallpulver, aufgebaut werden.

Wie einleitend bereits angemerkt, können beim Nachbearbeiten eines mittels additiver Fertigung hergestellten teilfertigen Bauteils erhebliche Kräfte bzw. Drücke auf das Bauteil ausgeübt werden. Um ein Risiko, dass aufgrund solcher Kräfte bzw. Drücke negative Einflüsse auf das fertige Bauteil bewirkt werden, zu reduzieren, wurden herkömmlich verschiedene Maßnahmen eingesetzt. Einerseits wurde versucht, die beim nach Bearbeiten ausgeübten Kräfte bzw. Drücke in akzeptablen Grenzen zu halten, beispielsweise indem die hierbei eingesetzten Bearbeitungsverfahren geeignet umgesetzt bzw. modifiziert wurden. Zum Beispiel wurden spanende Verfahren mit speziell angepassten Werkzeugen und/oder einer angepassten Handhabung von Werkzeugen eingesetzt, um Kräfte gering zu halten, wodurch sich jedoch oft auch Bearbeitungszeiten verlängert und/oder Kosten für die Herstellung und den Betrieb der Werkzeuge erhöht haben. Alternativ oder ergänzend konnten an einem nachzubearbeitenden teilfertigen Bauteil zusätzliche Stützstrukturen ausgebildet werden, die speziell dazu angepasst wurden, die beim Nachbearbeiten auftretenden Kräfte aufzunehmen und dadurch andere Bereiche des teilfertigen Bauteils temporär zu schützen. Allerdings mussten im Allgemeinen solche zusätzlichen Stützstrukturen letztendlich selbst auch durch geeignete Nachbearbeitung abgetragen werden.

Es wurde nun erkannt, dass die beim spanenden Nachbearbeiten auftretenden Kräfte erheblich dadurch reduziert werden können, dass zweite Bauteilbereiche des teilfertigen Bauteils, welche beispielsweise als Stützstrukturen dienen und welche beim Nachbearbeiten spanend abgetragen werden sollen, bereits bei deren additiver Fertigung gezielt mit einer geringeren mechanischen Festigkeit aufgebaut werden als erste Bauteilbereiche des teilfertigen Bauteils, welche nach dem Nachbearbeiten das fertige Bauteil bilden sollen. Dabei kann, wie weiter unten detaillierter ausgeführt, ausgenutzt werden, dass die mechanische Festigkeit eines Bauteilbereichs, der durch additive Fertigung hergestellt wird, stark von verschiedenen Fertigungsparametern, mit denen das additive Fertigungsverfahren konfiguriert sein kann, beeinflusst wird. Indem diese Fertigungsparameter beim additiven Fertigen der ersten Bauteilbereiche derart anders gewählt werden als beim additiven Fertigen der zweiten Bauteilbereiche, dass die zweiten Bauteilbereiche eine geringere mechanische Festigkeit erhalten, kann bewirkt werden, dass die zweiten Bauteilbereiche nachfolgend ohne Ausübung übermäßiger Kräfte spanend entfernt werden können.

Vorzugsweise sollte die mechanische Festigkeit, mit der die zweiten Bauteilbereiche aufgebaut werden, um wenigstens 10 %, vorzugsweise wenigstens 20 % oder sogar wenigstens 50 % geringer sein als die mechanische Festigkeit der ersten Bauteilbereiche.

Die mechanische Festigkeit eines Werkstoffes beschreibt hierbei eine Beanspruchbarkeit durch mechanische Belastungen, bevor es zu einem Versagen kommt, und wird angegeben als mechanische Spannung (Kraft pro Querschnittsfläche). Das Versagen kann eine unzulässige Verformung sein, insbesondere eine plastische Verformung oder auch ein Riss oder Bruch.

Es wird darauf hingewiesen, dass das teilfertige Bauteil bei Bedarf auch mit mehr als nur einem zweiten Bauteilbereich ausgebildet werden kann. Beispielsweise kann gewünscht sein, das teilfertige Bauteil in verschiedenen Teilarealen durch spanendes Abtragen von Material nachzubearbeitenden. In diesem Fall kann an jedem Teilareal ein zweiter Bauteilbereich vorgesehen sein.

Ferner wird darauf hingewiesen, dass der zweite Bauteilbereich nicht zwingend derart hergestellt werden braucht, dass sich darin über ein gesamtes Volumen eine homogene mechanische Festigkeit einstellt. Stattdessen kann der zweite Bauteilbereich durch gezielte Wahl der bei dessen additivem Aufbauen verwendeten Prozessparameter derart ausgestaltet werden, dass eine mechanische Festigkeit von Ort zu Ort graduell variiert. Beispielsweise kann die mechanische Festigkeit derart eingestellt werden, dass sie angrenzend an die Grenzfläche zu dem ersten Bauteilbereich lediglich geringfügig geringer ist als im ersten Bauteilbereich und dann mit zunehmendem Abstand von der Grenzfläche sukzessive abnimmt. Die lokal variierende Festigkeit kann sich später vorteilhaft beim Nachbearbeiten des teilfertigen Bauteils erweisen.

Nachdem das teilfertige Bauteil mit seinem ersten und seinem zweiten Bauteilbereich entsprechend durch additive Fertigung aufgebaut wurde, wird der zweite Bauteilbereich durch spanendes Abtragen entfernt. Dabei wird jedoch nicht lediglich allein der zweite Bauteilbereich spanend abgetragen. Stattdessen wird darüber hinaus auch ein an die Grenzfläche angrenzender Teil des ersten Bauteilbereichs mit abgetragen.

Anders ausgedrückt soll bei dem im Rahmen der Nachbearbeitung durchgeführten spanenden Abtragen nicht lediglich eine den zweiten Bauteilbereich bildende Schicht abgetragen werden. Stattdessen soll das hierbei verwendete Werkzeug derart ausgestaltet und eingesetzt werden, dass mit dem Abtragen des zweiten Bauteilbereichs gleichzeitig auch ein oberflächennaher Teilbereich, d.h. ein Teilbereich, der an die Grenzfläche zwischen dem ersten und dem zweiten Bauteilbereich angrenzt, des ersten Bauteilbereichs ebenfalls abgetragen wird.

Aufgrund eines solchen spanenden Nachbearbeitens wird eine bei dem letztendlich fertiggestellten Bauteil freiliegende Oberfläche dadurch gebildet, dass beim spanenden Abtragen auch ein Teil des ersten Bauteilbereichs entfernt wird. Eigenschaften der freiliegenden Oberfläche werden somit nicht überwiegend von Eigenschaften bestimmt, wie sie sich durch das additive Fertigen des ersten Bauteilbereichs ergeben, sondern durch Eigenschaften, wie sie sich durch das spanende Abtragen von Teilen dieses ersten Teilbereichs ergeben. Anders ausgedrückt resultieren Eigenschaften wie beispielsweise eine Geometrie, eine Oberflächenstruktur und/oder eine Positionsgenauigkeit einer freiliegenden Oberfläche des fertigen Bauteils nicht mehr überwiegend aus Eigenschaften des zu dessen Fertigung eingesetzten additiven Fertigungsverfahrens, welches oft in nicht ausreichend präzisen Geometrien und/oder einer unebenen Oberflächenstruktur resultiert. Stattdessen wird die freiliegende Oberfläche des fertigen Bauteils durch Eigenschaften des beim Nachbearbeiten eingesetzten spanenden Abtragens definiert. Hierzu eingesetzte Dreh-, Fräs- oder Bohrverfahren ermöglichen oft eine sehr genaue, toleranzarme Fertigung einer Bauteilgeometrie mit einer gewünschten Positionierung und Struktur von dabei erzeugten Oberflächen.

Der bei dem teilfertigen Bauteil angrenzend an den ersten Bauteilbereich befindliche zweite Bauteilbereich kann dabei einerseits als Stützstruktur wirken und andererseits, wie weiter unten noch detaillierter ausgeführt, beim spanenden Abtragen des an die Grenzfläche angrenzenden Teils des ersten Bauteilbereichs vorteilhaft wirken, insbesondere, wenn eine abzutragende Schicht des ersten Bauteilbereichs sehr dünn und damit für sich alleine gesehen instabil ist.

Gemäß einer Ausführungsform wird der erste Bauteilbereich mit einer ersten Porosität aufgebaut und der zweite Bauteilbereich wird mit einer zweiten Porosität, welche höher ist als die erste Porosität, aufgebaut.

Anders ausgedrückt können Parameter, welche die Art und Weise, wie der erste und der zweite Bauteilbereich beim additiven Fertigen aufgebaut werden, derart gewählt werden, dass sich jeweils eine bestimmte Porosität in dem gebildeten Bauteilbereich einstellt.

Ein poröser Bauteilbereich umfasst viele kleine Poren, d.h. Hohlräume, innerhalb eines Volumens des Bauteilbereichs. Die Hohlräume können in sich abgeschlossen sein, d.h. der Bauteilbereich kann geschlossenporig sein. Die Hohlräume können aber auch ineinander übergehen, d.h. der Bauteilbereich kann offenporig sein. Die Porosität gibt hierbei einen Quotienten aus dem kumulierten Volumen aller Poren im Verhältnis zum Volumen des gesamten Bauteilbereichs an. D.h., je kleiner die Poren sind und je weniger Poren vorhanden sind, umso geringer ist die Porosität.

Es wurde erkannt, dass die Porosität, mit der ein Bauteilbereich aufgebaut wurde, einen erheblichen Einfluss auf dessen physikalische Eigenschaften, insbesondere auf dessen mechanische Festigkeit, haben kann. Indem die beim additiven Fertigen der beiden verschiedenen Bauteilbereiche eingesetzten Fertigungsparameter gezielt derart variiert werden, dass sich in den beiden Bauteilbereichen unterschiedliche Porositäten ergeben, kann somit die mechanische Festigkeit im zweiten Bauteilbereich in gewünschter Weise geringer eingestellt werden als im ersten Bauteilbereich. Die Porosität kann über den gesamten zweiten Bauteilbereich homogen sein. Alternativ kann der zweite Bauteilbereich derart aufgebaut werden, dass die Porosität innerhalb des zweiten Bauteilbereichs variiert. Beispielsweise kann eine Porosität nahe der Grenzfläche geringer eingestellt sein als entfernt von der Grenzfläche.

Dabei wird gemäß einer konkretisierten Ausführungsform der erste Bauteilbereich vorzugsweise mit einer Porosität von weniger als 15%, vorzugsweise weniger als 10%, stärker bevorzugt weniger als 5%, aufgebaut.

Mit anderen Worten werden die zum additiven Fertigen des ersten Bauteilbereichs eingesetzten Fertigungsparameter vorzugsweise derart gewählt, dass sich in dem ersten Bauteilbereich möglichst wenige und/oder möglichst kleine Poren bilden. Idealerweise kann eine porenfreie Ausbildung des ersten Bauteilbereichs angestrebt werden. Aufgrund seiner geringen Porosität kann der erste Bauteilbereich eine sehr hohe mechanische Festigkeit aufweisen. Auch andere physikalische Eigenschaften wie beispielsweise eine Oberflächenstruktur, eine Dichtigkeit, etc. können von einer geringen bzw. fehlenden Porosität profitieren. Letztendlich kann die geringe bzw. fehlende Porosität eine hohe Qualität des fertiggestellten Bauteils ermöglichen.

Gemäß einer weiteren konkretisierten Ausführungsform können die erste und die zweite Porosität derart ausgebildet sein, dass eine Dichte von den zweiten Bauteilbereich bildendem Material um zwischen 1% und 20%, vorzugsweise zwischen 2% und 8%, geringer ist als eine Dichte von den ersten Bauteilbereich bildendem Material.

Generell beeinflusst die Porosität, mit der ein Material ausgestattet ist, direkt dessen Dichte. Im Allgemeinen sinkt die Dichte linear mit steigender Porosität. Zusammen mit der Dichte sinkt bei steigender Porosität üblicherweise auch die mechanische Festigkeit des Materials.

Betreffend das hierin vorgestellte Herstellungsverfahren wurde beobachtet, dass bereits eine relativ geringfügig größere zweite Porosität in dem zweiten Bauteilbereich im Vergleich zu der ersten Porosität in dem ersten Bauteilbereich dazu führen kann, dass beim anschließenden spanenden Abtragen des zweiten Bauteilbereichs erheblich geringere Kräfte ausgeübt werden brauchen und somit auf verbleibende Bereiche des Bauteils ausgeübt werden, als dies der Fall wäre, wenn beide Bauteilbereiche mit gleichen Porositäten ausgebildet würden.

Beispielsweise wurde beobachtet, dass bereits eine geringfügig erhöhte zweite Porosität, die in dem damit gebildeten Material zu einer Dichte führt, die lediglich um wenige Prozent unterhalb der Dichte des mit keiner oder deutlich geringerer Porosität gebildeten ersten Bauteilbereichs liegt, dazu führt, dass der zweite Bauteilbereich beim anschließenden Nachbearbeitens erheblich leichter spanend abgetragen werden kann als in einer Konstellation, bei der beide Bauteilbereiche eine gleiche Porosität und damit eine gleiche Dichte aufweisen.

Bei Versuchen wurde beispielsweise beobachtet, dass eine um etwa 4 - 6 % relativ reduzierte Dichte bei dem zweiten Bauteilbereich dazu führte, dass zum spanenden Abtragen des zweiten Bauteilbereichs um bis zu 50 % geringere Kräfte notwendig waren, als bei Bauteilen mit gleichen Dichten in beiden Bauteilbereichen. Bei einer konkreten Ausgestaltung wurde beobachtet, dass ein Material, welches bei massiver, d.h. im Wesentlichen porenfreier Ausgestaltung, eine Dichte von 8,0 g/cm³ aufweist, bereits in einem lediglich geringfügig mit Poren versetzten Zustand, bei dem sich eine Dichte von ca. 7,6 g/cm³ einstellt, mit erheblich verringerten Kräften spanend nachbearbeitet werden kann.

Dabei wurde auch beobachtet, dass für den Fall, dass das Material mit noch höherer Porosität erzeugt wird, sodass sich eine Dichte von ca. 7,1 g/cm³ ergibt, sich das teilfertige Bauteil zwar eventuell sogar noch kraftärmer spanend nachbearbeiten lässt, dass aber mit weiter abnehmender Dichte negative Effekte eintreten können. Beispielsweise wurde beobachtet, dass für den Fall, dass der zweite Bauteilbereich eine übermäßig stark reduzierte Dichte aufweist, beim anschließenden spanenden Nachbearbeiten eine qualitativ schlechtere Oberfläche resultieren kann, als dies bei etwas größeren Dichten der Fall ist. Insbesondere wurde bei Tests beobachtet, dass Bauteile, bei denen der zweite Bauteilbereich eine zu geringe Dichte aufwies, nach dem spanenden Nachbearbeiten eine rauere bzw. mit mehr und/oder tieferen oberflächennahen Vertiefungen versehene Oberfläche aufwies, als dies bei Bauteilen mit etwas höherer Dichte der Fall war. Auch eine Art und Weise, wie, mit welcher Form und mit welcher Größe Späne beim spanenden Abtragen erzeugt werden, scheint stark von der Porosität und Dichte des Materials des zweiten Bauteilbereichs abzuhängen und kann bei zu geringer Dichte negativ beeinflusst sein.

Gemäß einer Ausführungsform wird der zweite Bauteilbereich vorzugsweise mit Poren aufgebaut, welche Querschnittsabmessungen im Bereich von 0.3µm bis 30µm, vorzugsweise im Bereich von 1µm bis 5µm, aufweisen.

Anders ausgedrückt wurde es als vorteilhaft erkannt, beim additiven Fertigen des zweiten Bauteilbereichs verwendete Verfahrensparameter derart zu wählen, dass sich in dem Material des gebildeten zweiten Bauteilbereichs verhältnismäßig kleine Poren bilden. Solche Poren können beispielsweise durch Lufteinschlüsse, wie sie während des additiven Fertigens in das gebildete Material eingebaut werden, generiert werden. Selbst die Bildung einer Vielzahl derart kleiner Poren verringert dabei eine Dichte des aufgebauten Materials insgesamt lediglich geringfügig, kann aber zu einer erheblichen Schwächung der mechanischen Festigkeit des Bauteils beitragen. Es wurde erkannt, dass bei bestimmten additiven Fertigungsverfahren Poren mit den beschriebenen Abmessungen relativ einfach in Abhängigkeit von gewählten Verfahrensparametern generiert werden können.

Gemäß einer Ausführungsform werden der erste und der zweite Bauteilbereich durch sukzessives Bilden von festen Schichten gemäß einer Bauteilgeometrie aufgebaut. Dabei wird jede der Schichten durch schichtartiges Anlagern von pulverförmigem Material und nachfolgendes temporäres lokales Erhitzen des pulverförmigen Materials innerhalb der Bauteilgeometrie gebildet. Das pulverförmige Material wird hierbei durch Eintragen von Energie mittels eines Energiestrahls über eine Schmelztemperatur oder über eine Sintertemperatur erhitzt und der Energiestrahl wird zum Bilden einer der festen Schichten sukzessive gemäß vorbestimmten Bahnen entlang einer Fläche der zu bildenden Schicht verlagert.

Anders ausgedrückt wird jeder der beiden Bauteilbereiche im Rahmen eines schichtweisen Aufbauens einer Bauteilgeometrie erzeugt. Dabei werden nacheinander mehrere Schichten übereinander gebildet, wobei jede Schicht mit benachbarten Schichten stoffschlüssig verbunden ist und eine Kontur aufweist, die der letztendlich angestrebten Bauteilgeometrie im Bereich dieser Schicht entspricht.

Um eine Schicht zu bilden wird hierbei pulverförmiges Material wie beispielsweise ein Metallpulver schichtartig angelagert, d.h. beispielsweise angrenzend an eine bereits zuvor gebildete Schicht aufgebracht. Anschließend wird das pulverförmige Material in den Arealen, in denen es der angestrebten Bauteilgeometrie entspricht, kurzzeitig erhitzt und damit vorzugsweise lokal aufgeschmolzen oder zumindest über eine Sintertemperatur gebracht, sodass sich benachbarte Pulverkörner stoffschlüssig miteinander verbinden können, um beim anschließenden Verfestigen eine der Bauteilgeometrie entsprechende Schicht zu bilden.

Hierzu wird ein Energiestrahl auf das pulverförmige Material in einem Teilareal der Bauteilgeometrie gerichtet, sodass es durch Absorption des Energiestrahls zum Erhitzen und letztendlich zum Aufschmelzen oder Zusammensintern des pulverförmigen Materials kommt.

Der Energiestrahl kann hierbei beispielsweise ein Lichtstrahl, insbesondere ein Laserstrahl sein. Eigenschaften wie beispielsweise eine Lichtleistung, eine Wellenlänge emittierten Laserlichts, Pulsdauern bzw. cw-Betrieb und Ähnliches können dabei derart gewählt sein, dass der Laserstrahl effizient in dem zuvor abgeschiedenen pulverförmigen Material absorbiert wird und dieses lokal und temporär z.B. über dessen Schmelzpunkt hinaus erhitzt. Durch das Aufschmelzen können benachbarte Pulverkörner ein gemeinsames Schmelzbad bilden und nach dem anschließenden Abkühlen und Erstarren stoffschlüssig verbunden die gemeinsam gebildete Schicht generieren.

Das beschriebene Verfahren entspricht oder ähnelt hierbei dem Laserpulverbettfusionsverfahren, dem selektiven Laserschmelzen oder dem selektiven Lasersintern. Eigenschaften und Vorteile dieser Herstellungsverfahren können dabei beim Aufbauen des ersten und des zweiten Bauteilbereichs genutzt werden.

Da ein Querschnitt des Energiestrahls, d.h. die Fläche des Teilareals, das von dem Energiestrahl beleuchtet und erhitzt wird, im Allgemeinen deutlich kleiner ist als die Fläche der entsprechend der Bauteilgeometrie zu bildenden Schicht, wird der Energiestrahl sukzessive in vorbestimmten Bahnen entlang der Fläche der zu bildenden Schicht verlagert. D.h., das zuvor schichtartig abgeschiedene pulverförmige Material wird dort, wo es temporär erhitzt und anschließend wieder verfestigt werden soll, sukzessive mit dem Energiestrahl abgescannt.

Gemäß einer konkretisierten Ausführungsform wird zum Aufbauen der Schichten des ersten Bauteilbereichs der Energiestrahl mit einer ersten Leistungsdichte entlang der Fläche der zu bildenden Schicht verlagert und zum Aufbauen der Schichten des zweiten Bauteilbereichs der Energiestrahl mit einer zweiten Leistungsdichte, welche sich von der ersten Leistungsdichte unterscheidet und vorzugsweise geringer ist als die erste Leistungsdichte, entlang der Fläche der zu bildenden Schicht verlagert.

Anders ausgedrückt wird der Energiestrahl, bzw. konkret der Laserstrahl, mittels dessen beim Aufbauen der Schichten der beiden Bauteilbereiche das dort zuvor aufgebrachte pulverförmige Material erhitzt wird, beim Aufbauen des ersten Bauteilbereichs in anderer Weise eingesetzt als beim Aufbauen des zweiten Bauteilbereichs. Insbesondere wird der Energiestrahl in einer Weise modifiziert, dass er beim Aufbauen des ersten Bauteilbereichs mit einer anderen Leistungsdichte auf die Schicht pulverförmigen Materials gerichtet wird als beim Aufbauen des zweiten Bauteilbereichs.

Aufgrund der unterschiedlichsten Leistungsdichte ändert sich beim Aufbauen der beiden Bauteilbereiche auch die Art und Weise, wie das pulverförmige Material die eingestrahlte Leistung absorbiert, sich daraufhin erhitzt und sich benachbarte Pulverkörner letztendlich stoffschlüssig miteinander verbinden. Insbesondere beeinflusst die eingestrahlte Leistungsdichte unter anderem, ob alle oder nur einige der vorhandenen Pulverkörner gleichmäßig erhitzt und/oder aufgeschmolzen werden, ob bzw. in welchem Maße es dabei zu einer Bildung von Dämpfen oder Gasen kommt, wie groß und/oder wie tief ein hierbei aufgeschmolzenes Schmelzbad ist, etc.

Dabei variiert mit der eingestrahlten Leistungsdichte auch die Neigung zu einer Porenbildung. D.h. je nachdem wie hoch die in dem pulverförmigen Material absorbierte Leistung ist, kann es zu einer Ausbildung von mehr oder weniger Poren sowie zu einer variierenden Größe solcher Poren kommen.

Insgesamt kann somit durch das Variieren der Leistungsdichte des eingesetzten Energiestrahls gezielt beeinflusst werden, welche Porosität sich in der generierten Materialschicht einstellt und somit, welche mechanische Festigkeit die generierte Materialschicht aufweist. Dabei kann die Leistungsdichte beim Aufbauen des ersten Bauteilbereichs vorzugsweise derart eingestellt sein, dass sich eine geringe oder im Wesentlichen keine Porosität einstellt. Beim Aufbauen des zweiten Bauteilbereichs hingegen kann die Leistungsdichte im Vergleich hierzu derart gesteigert oder vorzugsweise reduziert werden, dass sich mehr und/oder größere Poren bilden. Beispielsweise kann eine Erhöhung der eingestrahlten Leistungsdichte dazu führen, dass hierbei sehr schnell erhitztes Material lokal schlagartig verdampft und dabei eventuell benachbartes Material mitreißt, wodurch sich beim anschließenden Abkühlen porenartige Hohlräume bilden können. Durch Reduzierung der eingestrahlten Leistungsdichte kann beispielsweise bewirkt werden, dass benachbarte Pulverkörner nicht vollkommen aufgeschmolzen werden und somit Hohlräume zwischen diesen Pulverkörnern auch nach dem Abkühlen in einem solchen unvollkommen aufgeschmolzen Volumen verbleiben.

Prinzipiell kann die Leistungsdichte eines Energiestrahls, insbesondere eines Laserstrahls, auf unterschiedliche Weise variiert werden. Beispielsweise kann die Leistung des Energiestrahls temporär variiert werden, indem beispielsweise eine Energiezufuhr zu einer den Energiestrahl emittieren Strahlenquelle variiert wird. Alternativ oder ergänzend kann ein Querschnitt des Energiestrahls temporär variiert werden, indem der Energiestrahl gezielt aufgeweitet oder fokussiert wird. Außerdem kann dadurch, dass der Energiestrahl sukzessive entlang von Bahnen verlagert wird, eine über einen kurzen Zeitraum hin in einem Teilareal absorbierte Leistungsdichte variiert werden, indem eine Geschwindigkeit, mit der der Energiestrahl entlang der Bahnen bewegt wird, variiert wird. Anders ausgedrückt kann die absorbierte Leistungsdichte durch Variieren einer Scangeschwindigkeit beeinflusst werden.

Gemäß einer konkretisierten und bevorzugten Ausführungsform kann das angestrebte Variieren der Leistungsdichte des Energiestrahls auch dadurch realisiert werden, dass zum Aufbauen der Schichten des ersten und des zweiten Bauteilbereichs der Energiestrahl sukzessive entlang von zueinander lateral benachbarten Teilstrecken verlagert wird und dabei ein erster lateraler Abstand zwischen direkt benachbarten Teilstrecken bei der Bildung der Schichten des ersten Bauteilbereichs kleiner ist als ein zweiter lateraler Abstand zwischen direkt benachbarten Teilstrecken bei der Bildung der Schichten des zweiten Bauteilbereichs.

Anders ausgedrückt kann der Energiestrahl zum Erhitzen des pulverförmigen Materials sukzessive entlang beispielsweise mäanderförmig verlaufender Bahnen verlagert werden, wobei er nacheinander entlang von Teilstrecken solcher Bahnen verlagert wird, welche lateral zueinander benachbart sind. Die von dem Energiestrahl verfolgten Bahnen können hierbei ein Muster ähnlich einer Schraffur bilden. Der laterale Abstand direkt benachbarten Teilstrecken der Bahnen einer solchen Schraffur wird auch als Schraffurabstand oder "Hatch-Abstand" bezeichnet.

Der Schraffurabstand kann hierbei kleiner, gleich oder größer als ein Durchmesser des Energiestrahls sein. Ist der Schraffurabstand kleiner als dieser Durchmesser, so überlappen benachbarte Teilstrecken der Bahnen des Energiestrahls einander lateral und eine insgesamt durch den Energiestrahl eingebrachte Leistungsdichte kann verhältnismäßig hoch sein. Im Gegensatz hierzu können für den Fall, dass der Schraffurabstand größer als der Durchmesser des Energiestrahls ist, lateral zwischen benachbarten Teilstrecken der Bahnen des Energiestrahls Bereiche existieren, die selbst nicht von dem Energiestrahl beleuchtet werden und die daher lediglich durch laterale Wärmeleitung ausgehend von den stark erhitzten, von dem Energiestrahl beleuchteten Bahnen erwärmt werden. Insgesamt kann in diesem Fall die durch den Energiestrahl eingebrachte Leistungsdichte verhältnismäßig gering sein.

Durch ein Variieren des Schraffurabstands beim Aufbauen des ersten und des zweiten Bauteilbereichs kann somit die jeweils eingebrachte Leistungsdichte in gewünschter Weise variiert werden. Das Variieren des Schraffurabstands kann hierbei verhältnismäßig einfach bzw. mit verhältnismäßig simplen technischen Mitteln umgesetzt werden.

Beispielsweise kann ein als Energiestrahl dienender Laserstrahl mithilfe einer Spiegeloptik entlang von schraffurartig angelegten Bahnen verlagert werden und dabei ein gewünschter Schraffurabstand durch geeignetes Ansteuern der Spiegeloptik variiert werden.

Gemäß einer konkretisierten Ausführungsform kann hierbei der zweite laterale Abstand wenigstens 20%, vorzugsweise wenigstens 40% und stärker bevorzugt wenigstens 80%, größer sein als der erste laterale Abstand.

Anders ausgedrückt kann der Schraffurabstand, der beim Aufbauen des zweiten Bauteilbereichs eingestellt wird, erheblich größer gewählt werden als derjenige, der beim Aufbauen des ersten Bauteilbereichs eingestellt wird. Ein solcher größer gewählter Schraffurabstand kann einerseits dazu führen, dass beim Bilden des zweiten Bauteilbereichs von dem Energiestrahl insgesamt eine geringere Leistungsdichte in das pulverförmige Material eingebracht wird und hierdurch vorzugsweise eine Bildung von Poren begünstigt wird, beispielsweise aufgrund eines unvollständigen Aufschmelzens benachbarter Pulverkörner. Andererseits kann eine insgesamt aufzubauende Fläche einer zu bildenden Schicht aufgrund des höher gewählten Schraffurabstands schneller abgescannt werden, wodurch das Aufbauen des zweiten Bauteilbereichs beschleunigt werden kann.

Gemäß einer Ausführungsform kann das spanende Abtragen, mit dem der zweite Bauteilbereich sowie ein Teil des ersten Bauteilbereichs abgetragen werden sollen, ein Abfräsen, Abdrehen und/oder Bohren sein.

Das Fräsen, Drehen und/oder Bohren sind Technologien zum spanenden Abtragen von Material, die gut beherrschbar sind und bekannt dafür sind, dass mit ihrer Hilfe Bauteile bzw. deren Oberflächen mit sehr hoher Positionierungsgenauigkeit bearbeitet werden können und/oder resultierende Oberflächen eine sehr hohe Qualität aufweisen können.

Die genannten Technologien setzen im Allgemeinen ein Werkzeug ein, welches mit einer Klinge aus zu bearbeitendem Material Späne abträgt. Die Klinge kann hierbei an einem Fräskopf, einem Drehmeißel bzw. einem Bohrer ausgebildet sein. Die Klinge kann dabei zusammen mit dem sie tragenden Werkzeug sehr genau positioniert und verfahren werden.

Dabei wurde es gemäß einer Ausführungsform als vorteilhaft erkannt, wenn der zweite Bauteilbereich angrenzend an die Grenzfläche mit einer Dicke von wenigstens 0,2mm, vorzugsweise wenigstens 0,4mm aufgebaut wird.

Insbesondere wurde erkannt, dass der zweite Bauteilbereich nicht nur notwendig bzw. hilfreich sein kann, um beispielsweise Hohlräume des ersten Bauteilbereichs abzustützen oder Areale des ersten Bauteilbereichs gegen übermäßige mechanische Belastungen, wie sie insbesondere beim Nachbearbeiten auftreten können, zu schützen. Stattdessen wurde erkannt, dass der zweite Bauteilbereich, wenn dieser geeignet ausgebildet und dimensioniert ist, auch im Rahmen des Nachbearbeitens hilfreich oder sogar notwendig sein kann.

Insbesondere wurde beobachtet, dass eine beim spanenden Abtragen eingesetzte Klinge eines Werkzeugs oft nur dann positionsgenau geführt werden kann, wenn die Dicke einer mit der Klinge abzutragenden Schicht nicht übermäßig klein ist. Insbesondere wurde erkannt, dass für den Fall, dass die abzutragende Schicht sehr dünn ist, die Klinge nicht ausreichend tief und damit von der abzutragenden Schicht geführt in das zu entfernende Material eingreifen kann, um aus diesem Späne auslösen zu können.

Angesichts dieser Erkenntnis wird angestrebt, den beim spanenden Abtragen zu entfernenden zweiten Bauteilbereich mit einer gewissen Mindestdicke von wenigstens 0,2mm auszubilden und somit das spanende Abtragen hinsichtlich der dabei generierten Oberfläche qualitativ zu unterstützen. Allerdings sollte der zweite Bauteilbereich auch nicht übermäßig dick sein, d.h. seine Dicke sollte im Allgemeinen kleiner als 5mm, vorzugsweise kleiner als 1mm sein.

Hierbei wurde auch beobachtet, dass eine Art und Weise, mit der beim spanenden Abtragen Späne gebildet werden, durch jeden der beiden und insbesondere eine Kombination der beiden bereits genannten Parameter, d.h. der beim Aufbauen der beiden Bauteilbereiche bewirkten Porosität einerseits und der Dicke der den zweiten Bauteilbereich bildenden Schicht andererseits, beeinflusst wird. Insbesondere wurde erkannt, dass sich beim spanenden Abtragen von Material des zweiten Bauteilbereichs gegebenenfalls aufgrund von dessen höherer Porosität und/oder speziell gewählter Dicke andere Spanformen und/oder Spanlängen bilden, als dies beim spanenden Abtragen von massivem bzw. niedrig porösem Material der Fall ist. Anders ausgedrückt kann dadurch, dass der zweite Bauteilbereich vorzugsweise mit einer höheren Porosität und geeigneten Dicke generiert wird, erreicht werden, dass die beim spanenden Abtragen generierten Späne anders und insbesondere kürzer als Späne beim Abtragen von massivem Material sind. Auch eine Form, Festigkeit, Sprödigkeit und andere physikalische Eigenschaften der beim Abtragen gebildeten Späne kann durch eine geeignete Wahl der Porosität und/oder Dicke des zweiten Bauteilbereichs in einer gewünschten Weise beeinflusst werden. Beispielsweise kann erreicht werden, dass sich die Späne mit einer Krümmung ausbilden, die in geeigneter Weise an Krümmungen angepasst sind, wie sie z.B. bei dem zum Abtragen eingesetzten Werkzeug auftreten, sodass derart geeignet gekrümmte Späne z.B. besser von dem Werkstück und/oder dem Werkzeug entfernt werden können. Andererseits wurden jedoch auch Fälle beobachtet, bei denen beispielsweise aufgrund einer zu hoch gewählten Porosität oder aufgrund einer zu gering oder zu groß gewählten Dicke des zweiten Bauteilbereichs eine Spanbildung negativ beeinflusst wurde, d.h. dass Späne beispielsweise in sich zu instabil waren und somit in sehr kleine Bruchstücke zerfallen konnten, welche den Abtragungsprozess stören konnten, oder dass Späne mit einer ungeeigneten Krümmung erzeugt wurden.

Zusammenfassend kann eine geeignete Wahl der Porosität und/oder Dicke des zweiten Bauteilbereichs das Nachbearbeiten des teilfertigen Bauteils erheblich vereinfachen, da beispielsweise kurze Späne während des Nachbearbeitens deutlich einfacher entfernt werden können, als dies bei langen Spänen der Fall ist. Dementsprechend kann ein Risiko, dass sich Späne während des Nachbearbeitens beispielsweise in einem Werkzeug verfangen oder den Prozess des Nachbearbeitens in anderer Weise stören, reduziert werden.

Es wird darauf hingewiesen, dass mögliche Merkmale und Vorteile von Ausführungsformen der Erfindung hierin teilweise mit Bezug auf ein erfindungsgemäß ausgestaltetes Herstellungsverfahren und teilweise mit Bezug auf ein erfindungsgemäßes teilfertiges Bauteil beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt ein teilfertiges Bauteil gemäß einer Ausführungsform der vorliegenden Erfindung.
Fig. 2 zeigt ein teilfertiges Bauteil gemäß einer weiteren Ausführungsform der vorliegenden Erfindung.
Fig. 3 veranschaulicht einen Prozessschritt zum Aufbauen von Schichten während eines Verfahrens zum Herstellen eines Bauteils gemäß einer Ausführungsform der vorliegenden Erfindung.
Fig. 4 veranschaulicht Bahnen, entlang derer ein Laserstrahl im Rahmen eines Prozessschritts eines Verfahrens zum Herstellen eines Bauteils gemäß einer Ausfiihrungsform der vorliegenden Erfindung verlagert wird.
Fign. 5 (a) - (c) veranschaulichen verschiedene Muster von Bahnen, entlang derer ein Laserstrahl im Rahmen eines Prozessschritts eines Verfahrens zum Herstellen eines Bauteils gemäß einer Ausführungsform der vorliegenden Erfindung verlagert wird.
Fig. 6 veranschaulicht einen Prozessschritt zum Entfernen von Teilen eines teilfertigen Bauteils während eines Verfahrens zum Herstellen eines Bauteils gemäß einer Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

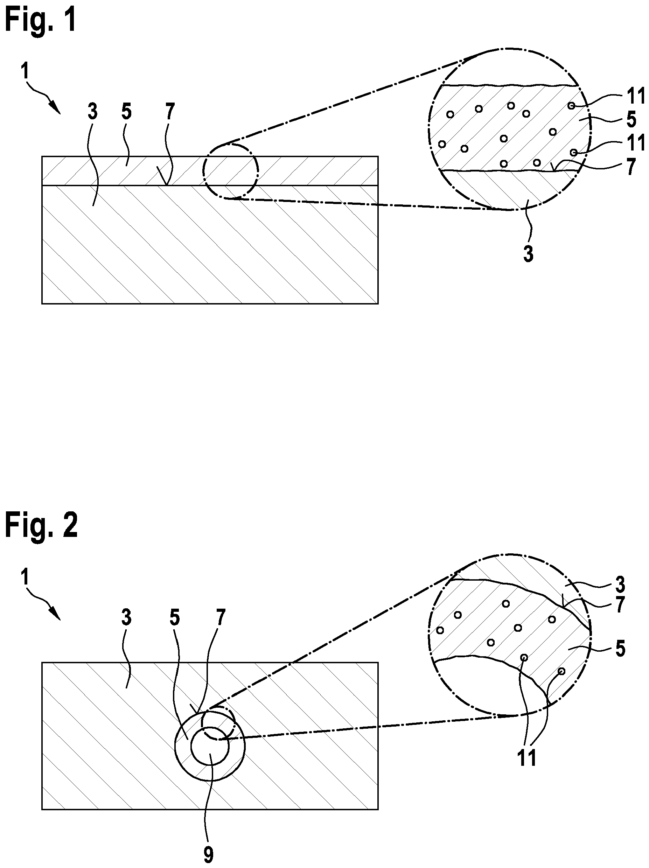

Fig. 1 zeigt ein erstes Beispiel eines teilfertigen Bauteils 1 mit einem ersten Bauteilbereich 3 und einem zweiten Bauteilbereich 5. Die beiden Bauteilbereiche 3, 5 sind beide schichtartig bzw. quaderförmig aufgebaut und grenzen an einer Grenzfläche 7 aneinander an.

Das dargestellte teilfertige Bauteil 1 soll lediglich beispielgebend für eine Vielzahl möglicher Bauteile stehen, bei denen angrenzend an eine Grenzfläche 7 eines ersten Bauteilbereichs 3 ein zweiter Bauteilbereiche 5 angeordnet ist. Das teilfertige Bauteil 1 kann eine beliebige Gesamtgeometrie aufweisen, d.h., deutlich komplexer geformt sein, als dies in der Figur vereinfacht beispielhaft dargestellt ist.

In Fig. 2 ist ein weiteres Beispiel eines teilfertigen Bauteils 1 dargestellt. Bei diesem Beispiel befindet sich innerhalb eines ersten Bauteilbereichs 3 ein zweiter Bauteilbereich 5. Beide Bauteilbereiche 3, 5 grenzen wiederum entlang einer Grenzfläche 7 aneinander an. Im dargestellten Beispiel umgeben die beiden Bauteilbereiche 3, 5 eine horizontal verlaufende Durchgangsöffnung 9. Der zweite Bauteilbereich 5 kleidet hierbei die zylindrisch ausgestaltete Grenzfläche 7 an deren Innenseite aus. Hierbei kann der zweite Bauteilbereich 5 unter anderem während der Herstellung des teilfertigen Bauteils 1 als Stützstruktur innerhalb der Durchgangsöffnung 9 wirken.

Die teilfertigen Bauteile 1 können durch additive Fertigung hergestellt werden. Die teilfertigen Bauteile 1 können sukzessive schichtartig aufgebaut werden. Außenliegende Oberflächen weisen dabei im Allgemeinen aufgrund der additiven Fertigung eine typische raue bzw. kleinräumig unebene Struktur auf.

Dabei können der erste Bauteilbereich 3 und der zweite Bauteilbereich 5 durch gezielte Einflussnahme auf bei der additiven Fertigung eingesetzte Parameter derart ausgebildet werden, dass sie unterschiedliche mechanische Festigkeiten besitzen. Insbesondere soll der erste Bauteilbereich 3 derart aufgebaut werden, dass er eine erste mechanische Festigkeit aufweist. Der zweite Bauteilbereich 5 wird mit anderen Parametern additiv gefertigt, sodass er eine zweite mechanische Festigkeit aufweist, die geringer ist als diejenige des ersten Bauteilbereichs 3.

Konkret können hierzu die bei der additiven Fertigung eingesetzten Fertigungsparameter derart variiert werden, dass der erste Bauteilbereich 3 im Wesentlichen massiv, d.h. porenfrei, oder mit einer sehr geringen Porosität aufgebaut wird, wohingegen zum Aufbauen des zweiten Bauteilbereichs 5 die Fertigungsparameter derart variiert werden, dass sich eine Vielzahl kleiner Poren 11 bildet. Die Poren 11 weisen überwiegend verhältnismäßig kleine Querschnittsabmessungen auf. Beispielsweise kann ein maximaler Durchmesser der meisten Poren im Bereich von 0,3 µm bis 30 µm, vorzugsweise 1 µm bis 5 µm betragen. Für den zweiten Bauteilbereich 5 ergibt sich dadurch eine Porosität, die vorzugsweise im Bereich von 1 % bis 20 %, stärker bevorzugt im Bereich von 2 % bis 8 % liegt.

Obwohl die beiden Bauteilbereiche 3, 5 bei der additiven Fertigung vorzugsweise aus dem gleichen Grundmaterial, das heißt beispielsweise mit dem gleichen Metallpulver, aufgebaut werden, kann aufgrund der höheren Porosität die Dichte des den zweiten Bauteilbereich 5 bildenden Materials geringer sein als diejenige des den ersten Bauteilbereich 3 bildenden Materials. Entsprechend der jeweils bewirkten Porositäten kann die Dichte des Materials des zweiten Bauteilbereich 5 beispielsweise zwischen 1 % und 20 %, vorzugsweise zwischen 2 % und 8 %, geringer sein als die Dichte des Materials des ersten Bauteilbereich 3.

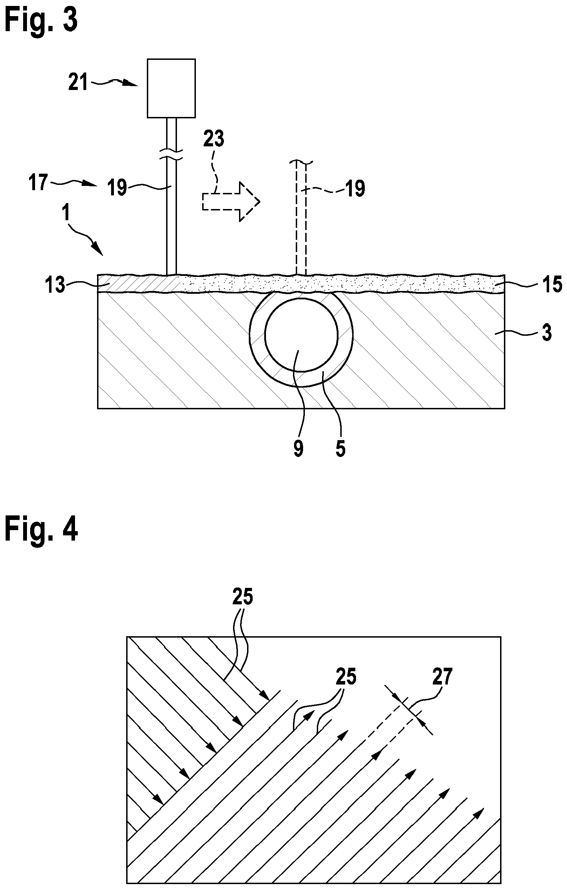

In Fig. 3 ist eine Möglichkeit veranschaulicht, wie die beiden Bauteilbereiche 3, 5 durch additive Fertigung aufgebaut werden können. Dabei werden sukzessive feste Schichten 13 in einer Weise gebildet, dass sie einer angestrebten Bauteilgeometrie entsprechen.

Hierzu wird zunächst pulverförmiges Material 15, das heißt beispielsweise ein Metallpulver mit Pulverkörnern mit Korndurchmessern im Bereich einiger Mikrometer oder kleiner, auf einer Unterlage oder auf einer Oberfläche eines bereits zuvor gebildeten Teils des teilfertigen Bauteils 1 angelagert. Anschließend wird dieses pulverförmige Material 15 in den Bereichen, die die angestrebte Bauteilgeometrie bilden sollen, lokal temporär erhitzt, bis es eine Sintertemperatur erreicht, bei der benachbarte Pulverkörner sich durch einen Sintervorgang stoffschlüssig miteinander verbinden, oder sogar bis es eine Schmelztemperatur erreicht, bei der benachbarte Pulverkörner miteinander verschmelzen.

Zum lokalen Erhitzen des pulverförmigen Materials 15 wird hierbei ein Energiestrahl 17 eingesetzt. Vorzugsweise ist dieser Energiestrahl 17 ein Laserstrahl 19, der von einem Laser 21 auf diejenigen Bereiche des pulverförmigen Materials 15 gerichtet wird, die die feste Schicht 13 bilden sollen. Der Laserstrahl 19 wird hierbei in einer Scanrichtung 23 entlang der Oberfläche der von dem pulverförmigen Material 15 zu bildenden Schicht 13 geführt.

Statt eines Laserstrahls 19 können prinzipiell alternativ auch andere energieübertragende Strahle wie beispielsweise Elektronenstrahle als Energiestrahle 17 eingesetzt werden.

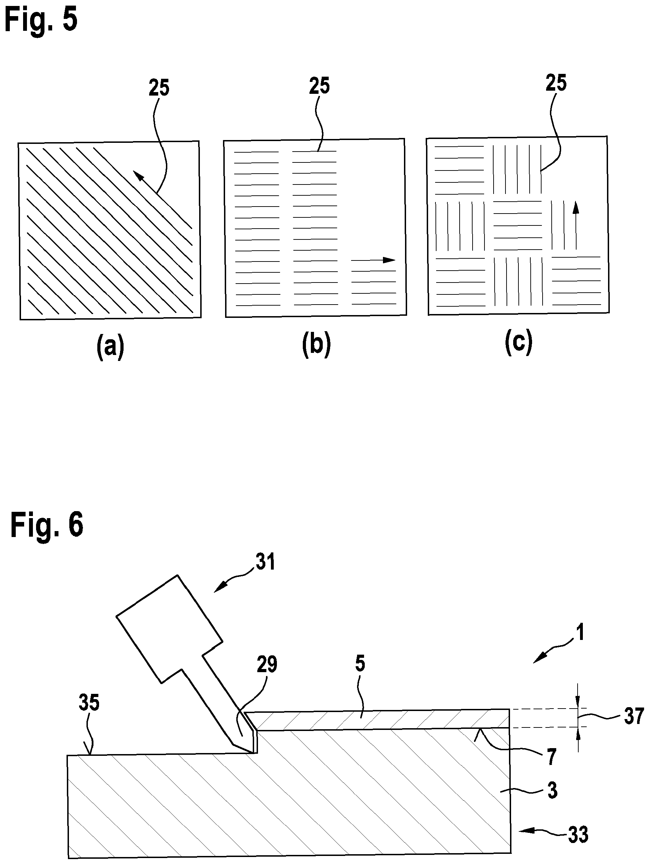

Wie in Fig. 4 veranschaulicht, wird der Laserstrahl 19 hierbei entlang zueinander lateral benachbarter Teilstrecken 25 bewegt. Wie in Fig. 5 dargestellt, kann eine gesamte abzuscannende Fläche dabei durch verschiedene Muster (a) - (c) von benachbarten Teilstrecken 25 abgedeckt werden.

Um beim Aufbauen der festen Schicht 13 eine sich darin ergebende Porosität zu beeinflussen, kann eine Leistungsdichte, mit der der Energiestrahl 17 Energie in das pulverförmige Material 15 einträgt, beim Aufbauen der den ersten Bauteilbereich 3 bildenden Bereiche der Schicht 13 anders gewählt werden als beim Aufbauen der den zweiten Bauteilbereich 5 bildenden Bereiche der Schicht 13.

Prinzipiell ist vorstellbar, zu diesem Zweck beispielsweise den Laserstrahl 19 durch gezieltes Aufweiten oder Fokussieren hinsichtlich seiner Leistungsdichte zu verändern. Alternativ oder ergänzend kann der Laser 21 mit anderen Einstellungen betrieben werden, um den emittierten Laserstrahl 19 zu modifizieren. Auch eine Geschwindigkeit, mit der der Energiestrahl 17 verlagert wird, kann verändert werden, um die in das pulverförmige Material 15 eingetragene Energie zu variieren.

Es wurde jedoch als bevorzugt erkannt, die eingestrahlte Leistungsdichte und somit die in das pulverförmige Material 15 eingetragene Energie dadurch zu variieren, dass der laterale Abstand 27 zwischen benachbarten Teilstrecken 25, entlang derer der Energiestrahl 17 verlagert wird, beim Aufbauen des ersten Bauteilbereichs 3 kleiner gewählt wird als beim Aufbauen des zweiten Bauteilbereichs 5. Beispielsweise kann zum Aufbauen des ersten Bauteilbereichs 3 dieser laterale Abstand 27 auf zwischen 50 µm und 100 µm eingestellt werden, wohingegen zum Aufbauen des zweiten Bauteilbereichs 3 ein lateraler Abstand 27 von zwischen 100 µm und 300 µm eingestellt wird.

Aufgrund des größeren lateralen Abstands 27 kann es dazu kommen, dass es in Arealen zwischen benachbarten Teilstrecken 25 zu einer unzureichenden Erhitzung des pulverförmigen Materials 15 durch den auftreffenden Energiestrahl 17 kommt, sodass das pulverförmige Material 15 nicht vollständig aufschmilzt und ein Schmelzbad bildet, sondern zwischen verbleibenden, unvollständig aufgeschmolzenen Pulverkörnern porenartige Hohlräume verbleiben. Diese Hohlräume bewirken die angestrebte erhöhte Porosität und reduzieren die mechanische Festigkeit innerhalb des zweiten Bauteilbereichs 5.

Nachdem das teilfertige Bauteil 1 durch additive Fertigung mit seinem ersten Bauteilbereich 3 und seinen zweiten Bauteilbereich 5 aufgebaut wurde, wird es gezielt nachbearbeitet. Eine solche Nachbearbeitung kann beispielsweise dazu dienen, Oberflächen eines letztendlich herzustellenden Bauteils 33 gewünschte Qualitäten wie beispielsweise eine besonders ebene bzw. glatte Struktur zu verleihen und/oder diese sehr positionsgenau auszubilden.

Wie in Fig. 6 schematisch veranschaulicht, wird hierzu der zweite Bauteilbereich 5 zusammen mit einem an die Grenzfläche 7 angrenzenden Teil des ersten Bauteilbereichs 3 durch spanendes Abtragen entfernt. Ein mit einer Klinge 29 ausgestattetes Werkzeug 31 wie beispielsweise ein Drehmeißel, ein Fräskopf oder ein Bohrer kann dabei so bewegt werden, dass die Klinge 29 entlang einer zu bildenden Oberfläche 35 des Bauteils 33 bewegt wird und dabei gleichzeitig sowohl den zweiten Bauteilbereich 5 als auch den an die Grenzfläche 7 angrenzenden Teil des ersten Bauteilbereichs 3 spanend abträgt. Die zu bildende Oberfläche 35 kann hierbei sehr positionsgenau gebildet werden und sehr eben bzw. glatt sein.

Dabei kann die zu bildende Oberfläche 35 nur wenig, d.h. beispielsweise nur wenige Mikrometer oder wenige Dutzend Mikrometer, unterhalb der Grenzfläche 7 verlaufen. Ohne die darüber befindliche Schicht, die den zweite Bauteilbereich 5 bildet, kann es schwierig sein, lediglich eine sehr dünne Schicht oberflächlich von dem ersten Bauteilbereich 3 abzutragen, beispielsweise da die Klinge 29 hierbei schlecht geführt sein kann und/oder die Klinge 29 eine derart dünne Schicht niederpresst, anstatt sie spanend abzutragen. Das oberhalb der zu bildenden Oberfläche 35 vorhandene Material des zweiten Bauteilbereichs 5 kann insbesondere dann, wenn der zweite Bauteilbereich 5 mit einer ausreichenden Dicke 37 von zumindest mehr als 0,2 mm, vorzugsweise mehr als 0,4 mm ausgebildet wird, dazu beitragen, dass die Klinge 29 beim spanenden Abtragen sowohl den zweiten Bauteilbereich 5 als auch den knapp darunterliegenden Teil des ersten Bauteilbereichs 3 präzise und zuverlässig untergreifen und abspanen kann.

Es wurde erkannt, dass dadurch, dass der zweite Bauteilbereich 5 zuvor gezielt mit einer geringeren mechanischen Festigkeit bzw. mit einer höheren Porosität ausgebildet wurde, der Vorgang des anschließenden spanenden Abtragens in mehrerlei Hinsicht positiv beeinflusst werden kann.

Beispielsweise wurde beobachtet, dass Stützstrukturen, welche beim additiven Fertigen von Bauteilen als Übermaß und/oder zum Abstützen von Hohlräumen oder Überhängen benötigt werden können, herkömmlich nur schwierig zu entfernen sein können. Insbesondere wurde beobachtet, dass zum Abtragen solcher herkömmlicher massiver Stützstrukturen oft hohe Kräfte auf das teilfertige Bauteil 1 ausgeübt werden müssen, wodurch dieses deformiert bzw. geschädigt werden kann.

Wenn derartige Stützstrukturen wie hierin vorgeschlagen als weniger mechanisch feste zweite Bauteilbereiche 5 mit erhöhter Porosität ausgebildet werden, wurde beobachtet, dass diese Stützstrukturen nachträglich mit deutlich geringeren Kräften bzw. Drücken, d.h. teilweise um mehr als 50 % oder sogar mehr als 80 % geringeren Kräften bzw. Drücken, spanend entfernt werden können.

Hierbei können auch Haltekräfte, die beispielsweise von einer Halteeinrichtung aufgebracht werden müssen, um das teilfertige Bauteil 1 während des spanenden Abtragens zu halten, geringer bleiben, sodass auch eine Deformierung bzw. Schädigung des teilfertigen Bauteils 1 aufgrund solcher Haltekräfte vermieden werden kann.

Es wurde auch beobachtet, dass sich die hinsichtlich ihrer mechanischen Festigkeit bzw. Porosität unterscheidenden Eigenschaften des zweiten Bauteilbereichs positiv auf eine Spanbildung beim spanenden Abtragen im Rahmen der Nachbearbeitung des Bauteils auswirken können. Insbesondere wurde beobachtet, dass bei einem herkömmlichen Herstellungsprozess, bei dem das gesamte teilfertige Bauteil 1 mit homogener Festigkeit bzw. Porosität ausgebildet wird und dann spanend nachbearbeitet wird, meist eine Bildung sehr langer Späne bewirkt wird, wobei die Späne oft als Wendelspäne oder Wirrspäne spiralförmig bzw. knäuelartig entstehen. Derartige Späne sind bei einer Fertigung unerwünscht, da sie schwierig zu entfernen sein können und/oder das zu fertigende Bauteil, eine hierbei eingesetzte Werkzeugmaschine oder einen die Werkzeugmaschine betätigenden Techniker schädigen können. Im Gegensatz hierzu bilden sich beim spanenden Abtragen des zweiten Bauteilbereichs 5, wie es hier beschrieben ist, meist deutlich kürzere Späne. Insbesondere werden die Späne vorzugsweise als kurze Spiralbruchspäne erzeugt, welche sich einfach entfernen lassen und ein geringes Verletzungsrisiko bilden.

Insgesamt können geringere Bearbeitungskräfte und damit zusammenhängend möglicherweise auch geringere Vibrationen beim Nachbearbeiten des teilfertigen Bauteils 1 erreicht werden. Damit einhergehend können einfachere Halte- bzw. Klemmmechanismen zum Halten des teilfertigen Bauteils 1 eingesetzt werden, weniger Werkzeugverschleiß bewirkt werden, kürzere Prozesszeiten erreicht werden, höhere Oberflächenqualitäten erzielt werden und/oder eine höhere Stabilität des schneidenden Abtragprozesses durch bessere Spanabfuhr erreicht werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: teilfertiges Bauteil
- 3: erster Bauteilbereich
- 5: zweiter Bauteilbereich
- 7: Grenzfläche
- 9: Durchgangsöffnung
- 11: Poren
- 13: feste Schicht
- 15: pulverförmiges Material
- 17: Energiestrahl
- 19: Laserstrahl
- 21: Laser
- 23: Scanrichtung
- 25: Teilstrecken
- 27: lateraler Abstand zwischen Teilstrecken
- 29: Klinge
- 31: Werkzeug
- 33: Bauteil
- 35: zu bildende Oberfläche
- 37: Dicke des zweiten Bauteilbereichs

## Patentansprüche

1. Verfahren zum Herstellen eines Bauteils (33), aufweisend:
Aufbauen eines ersten Bauteilbereichs (3) und eines zweiten Bauteilbereichs (5) jeweils durch additive Fertigung, wobei der erste und der zweite Bauteilbereich (3, 5) an einer Grenzfläche (7) aneinander angrenzen und wobei der erste Bauteilbereich (3) mit einer ersten mechanischen Festigkeit aufgebaut wird und der zweite Bauteilbereich (5) mit einer zweiten mechanischen Festigkeit, welche geringer ist als die erste mechanischen Festigkeit, aufgebaut wird;
Entfernen des zweiten Bauteilbereichs (5) zusammen mit einem an die Grenzfläche (7) angrenzenden Teil des ersten Bauteilbereichs (3) durch spanendes Abtragen.

2. Verfahren nach Anspruch 1, wobei der erste Bauteilbereich (3) mit einer ersten Porosität aufgebaut wird und der zweite Bauteilbereich (5) mit einer zweiten Porosität, welche höher ist als die erste Porosität, aufgebaut wird.

3. Verfahren nach Anspruch 2, wobei der erste Bauteilbereich (3) mit einer Porosität von weniger als 15%, vorzugsweise weniger als 10%, stärker bevorzugt weniger als 5%, aufgebaut wird.

4. Verfahren nach einem der Ansprüche 2 bis 3, wobei die erste und die zweite Porosität derart ausgebildet sind, dass eine Dichte von den zweiten Bauteilbereich (5) bildendem Material um zwischen 1% und 20%, vorzugsweise zwischen 2% und 8%, geringer ist als eine Dichte von den ersten Bauteilbereich (3) bildendem Material.

5. Verfahren nach einem der Ansprüche 1 bis 4, wobei der zweite Bauteilbereich (5) mit Poren (11) aufgebaut wird, welche Querschnittsabmessungen im Bereich von 0.3µm bis 30µm, vorzugsweise im Bereich von 1µm bis 5µm, aufweisen.

6. Verfahren nach einem der Ansprüche 1 bis 5, wobei der erste und der zweite Bauteilbereich (3, 5) durch sukzessives Bilden von festen Schichten (13) gemäß einer Bauteilgeometrie aufgebaut werden, wobei jede der Schichten (13) durch schichtartiges Anlagern von pulverförmigem Material (15) und nachfolgendes temporäres lokales Erhitzen des pulverförmigen Materials (15) innerhalb der Bauteilgeometrie gebildet wird,
wobei das pulverförmige Material (15) durch Eintragen von Energie mittels eines Energiestrahls (17) über eine Schmelztemperatur oder über eine Sintertemperatur erhitzt wird und der Energiestrahl (17) zum Bilden einer der festen Schichten (13) sukzessive gemäß vorbestimmten Bahnen entlang einer Fläche der zu bildenden Schicht verlagert wird.

7. Verfahren nach Anspruch 6, wobei zum Aufbauen der Schichten (13) des ersten Bauteilbereichs (3) der Energiestrahl (17) mit einer ersten Leistungsdichte entlang der Fläche der zu bildenden Schicht (13) verlagert wird und zum Aufbauen der Schichten (13) des zweiten Bauteilbereichs (5) der Energiestrahl (17) mit einer zweiten Leistungsdichte, welche sich von der ersten Leistungsdichte unterscheidet und vorzugsweise geringer ist als die erste Leistungsdichte, entlang der Fläche der zu bildenden Schicht (13) verlagert wird.

8. Verfahren nach Anspruch 7, wobei zum Aufbauen der Schichten (13) des ersten und des zweiten Bauteilbereichs (3, 5) der Energiestrahl (17) sukzessive entlang von zueinander lateral benachbarten Teilstrecken (25) verlagert wird und wobei ein erster lateraler Abstand (27) zwischen direkt benachbarten Teilstrecken (25) bei der Bildung der Schichten (13) des ersten Bauteilbereichs (3) kleiner ist als ein zweiter lateraler Abstand (27) zwischen direkt benachbarten Teilstrecken (25) bei der Bildung der Schichten (13) des zweiten Bauteilbereichs (5).

9. Verfahren nach Anspruch 8, wobei der zweite laterale Abstand (27) wenigstens 20%, vorzugsweise wenigstens 40% und stärker bevorzugt wenigstens 80%, größer ist als der erste laterale Abstand (27).

10. Verfahren nach einem der Ansprüche 6 bis 9, wobei der Energiestrahl (17) ein Laserstrahl (19) ist.

11. Verfahren nach einem der vorangehenden Ansprüche, wobei das spanende Abtragen ein Abfräsen, Abdrehen und/oder Bohren ist.

12. Verfahren nach einem der vorangehenden Ansprüche, wobei der zweite Bauteilbereich (5) angrenzend an die Grenzfläche (7) mit einer Dicke (37) von wenigstens 0,2mm, vorzugsweise wenigstens 0,4mm aufgebaut wird.

13. Teilfertiges Bauteil (1), aufweisend
einen ersten Bauteilbereich (3) und einen zweiten Bauteilbereich (5), welche jeweils durch additive Fertigung aufgebaut wurden,
wobei der erste und der zweite Bauteilbereich (3, 5) an einer Grenzfläche (7) aneinander angrenzen,
wobei der erste Bauteilbereich (3) eine erste Porosität aufweist und der zweite Bauteilbereich (5) eine zweite Porosität aufweist, welche derart höher ist als die erste Porosität, dass eine Dichte von den zweiten Bauteilbereich (5) bildendem Material um zwischen 1% und 20%, vorzugsweise zwischen 2% und 8%, geringer ist als eine Dichte von den ersten Bauteilbereich (3) bildendem Material.

14. Teilfertiges Bauteil nach Anspruch 13, wobei der zweite Bauteilbereich (5) Poren (11) aufweist, welche Querschnittsabmessungen im Bereich von 0.3µm bis 30µm, vorzugsweise im Bereich von 1µm bis 5µm, aufweisen.

15. Teilfertiges Bauteil nach einem der Ansprüche 13 und 14, wobei der zweite Bauteilbereich (5) angrenzend an die Grenzfläche (7) eine Dicke (37) von wenigstens 0,2mm, vorzugsweise wenigstens 0,4mm aufweist.
